# EUROPEAN PATENT APPLICATION

(11) **EP 4 436 155 A1**
(43) Date of publication of application: **25.09.2024**
(21) Application number: 23191599.2
(22) Date of filing: 16.08.2023
(51) Int. Cl.: H04N 1/00, B41F 33/00, G06F 3/12, H04N 1/23, G06K 15/02

(54) **INFORMATION PROCESSING SYSTEM, PROGRAM, AND INFORMATION PROCESSING METHOD**

(30) Priority: 22.03.2023 JP 2023045362
(71) Applicant: FUJIFILM Business Innovation Corp., Minato-ku Tokyo (JP)
(72) Inventor: KAWABE, Masatake, Yokohama-shi, Kanagawa (JP); NOGUCHI, Daisuke, Yokohama-shi, Kanagawa (JP); YAMAGUCHI, Megumi, Yokohama-shi, Kanagawa (JP); NAKAYAMA, Hiroyoshi, Yokohama-shi, Kanagawa (JP)
(74) Representative: Kurig, Thomas

(57) **Abstract**

An information processing system includes a processor configured to specify a first region in an image represented by printing data based on setting information for a printing process based on the printing data, and generate instruction information for an instruction to inspect the specified first region with inspection accuracy higher than inspection accuracy in a region other than the first region, as instruction information for an inspection device that inspects a result of the printing process.

## Description

### BACKGROUND OF THE INVENTION

### (i) Field of the Invention

The present invention relates to an information processing system, a program, and an information processing method.

### (ii) Description of Related Art

In the field of commercial printing or production printing, an inspection device that scans an output printed matter and inspects, for example, whether or not there is a stain and whether or not correct information is printed.

The apparatus disclosed in JP2001-277676A defines an inspection field based on a layout definition or the like of a printed matter and generates verification data representing data to be printed in the inspection field, in order to inspect a printed matter including individually different variable information. Such the apparatus performs the inspection by comparing an image obtained by capturing the inspection field of the printed matter to the verification data.

The apparatus disclosed in JP2012-000876A analyzes variable printing data to specify a fixed region, a margin region, and a variable region in a page. In inspecting a printing result, the apparatus calculates an error between a correct image and an inspection target image in accordance with determination criteria determined for each type of region such as the fixed region, the margin region, and the variable region, and determines whether an inspection result is OK or NG (see, for example, paragraphs [0050] and [0054] to [0061]).

The apparatus disclosed in JP2005-217931A extracts, from image data of a document having multiple pages, a fixed printing region in which contents that are commonly fixed among pages are printed, and a changed printing region in which contents that are changed for each page are printed. Such the apparatus inspects the fixed printing region with a lower printing quality determination criterion than the changed printing region (see, for example, paragraphs [0022] and [0027]).

### SUMMARY OF THE INVENTION

In an attempt to inspect the entire surface of a printed matter with high accuracy, for example, it is necessary to inspect large-sized image data obtained by scanning the printed matter with a high resolution, and thus the load of a calculation process for an inspection increases.

Therefore, it is conceivable to take measures such as limiting a target for an inspection with high accuracy only to a major region, for example. However, in a case where a user attempts to make a setting such as which region is to be inspected with high accuracy, a burden on the user is large.

An object of the present invention is to reduce a burden on a user for setting inspection accuracy for each region in a printed matter as compared with a case where the present invention is not used.

According to a first aspect of the present disclosure, there is provided an information processing system including a processor configured to specify a first region in an image represented by printing data based on setting information for a printing process based on the printing data, and generate instruction information for an instruction to inspect the specified first region with inspection accuracy higher than inspection accuracy in a region other than the first region, as instruction information for an inspection device that inspects a result of the printing process.

According to a second aspect of the present disclosure, there is provided the information processing system according to the first aspect, in which the processor may be configured to specify the first region based on a type of printed matter specified from the setting information.

According to a third aspect of the present disclosure, there is provided the information processing system according to the second aspect, in which the processor may be configured to, in a case where the specified type is a pressure-bonded printed matter, specify a region that is pressure-bonded and hidden, as the first region.

According to a fourth aspect of the present disclosure, there is provided the information processing system according to the second aspect, in which the processor may be configured to, in a case where the specified type is a folded printed matter, specify a region that is hidden from an outside in a folded state, as the first region.

According to a fifth aspect of the present disclosure, there is provided the information processing system according to the second aspect, in which the processor may be configured to, in a case where the specified type is a seal, specify a region within a cut line of the seal, as the first region.

According to a sixth aspect of the present disclosure, there is provided the information processing system according to any one of the first to fifth aspects, in which the processor may be configured to generate, as the instruction information, the instruction information including information for an instruction to inspect a region in which fixed data is printed in the first region, with accuracy lower than accuracy in a region in which variable data is printed in the first region.

According to a seventh aspect of the present disclosure, there is provided a program causing a computer to execute a process including specifying a first region in an image represented by printing data based on setting information for a printing process based on the printing data, and generating instruction information for an instruction to inspect on the specified first region with inspection accuracy higher than inspection accuracy in a region other than the first region, as instruction information for an inspection device that inspects a result of the printing process.

According to an eighth aspect of the present disclosure, there is provided an information processing method including specifying a first region in an image represented by printing data based on setting information for a printing process based on the printing data, and generating instruction information for an instruction to inspect the specified first region with inspection accuracy higher than inspection accuracy in a region other than the first region, as instruction information for an inspection device that inspects a result of the printing process.

According to the first, seventh, or eighth aspect of the present invention, it is possible to reduce a burden on a user for setting inspection accuracy for each region in a printed matter as compared with a case where the exemplary embodiment of the present invention is not used.

According to the second aspect of the present invention, it is possible to set inspection accuracy of each region in accordance with the type of printed matter.

According to the third aspect of the present invention, it is possible to set inspection accuracy for a region that is pressure-bonded and hidden, to be higher than inspection accuracy for a region that is not pressure-bonded and hidden.

According to the fourth aspect of the present invention, it is possible to set inspection accuracy for a region hidden in a folded state, to be higher than inspection accuracy for a region that is not hidden in the folded state.

According to the fifth aspect of the present invention, it is possible to set inspection accuracy for a region within a cut line of a seal, to be higher than inspection accuracy for a region that is not within the cut line of the seal.

According to the sixth aspect of the present invention, it is possible to set inspection accuracy for a region in which variable data is printed, to be higher than inspection accuracy for a region in which fixed data is printed.

### BRIEF DESCRIPTION OF THE DRAWINGS

Exemplary embodiment(s) of the present invention will be described in detail based on the following figures, wherein:
Fig. 1 is a diagram illustrating an example of a configuration of a printing and inspection system according to an exemplary embodiment;
Fig. 2 is a diagram illustrating a printing example of a pressure-bonded postcard;
Fig. 3 is a diagram illustrating an example of setting an inspection level for each region of the pressure-bonded postcard;
Fig. 4 is a diagram illustrating another example of setting the inspection level for each region of the pressure-bonded postcard;
Fig. 5 is a diagram illustrating an example of setting an inspection level for a seal;
Fig. 6 is a diagram for describing setting of a level based on a criterion other than a type of printed matter;
Fig. 7 is a diagram illustrating an example of a processing procedure of an information processing system;
Fig. 8 is a diagram illustrating a portion of another example of the processing procedure of the information processing system;
Fig. 9 is a diagram illustrating remaining portion of the other example of the processing procedure of the information processing system; and
Fig. 10 is a diagram illustrating an example of a hardware configuration of a computer.

### DETAILED DESCRIPTION OF THE INVENTION

### <System Configuration>

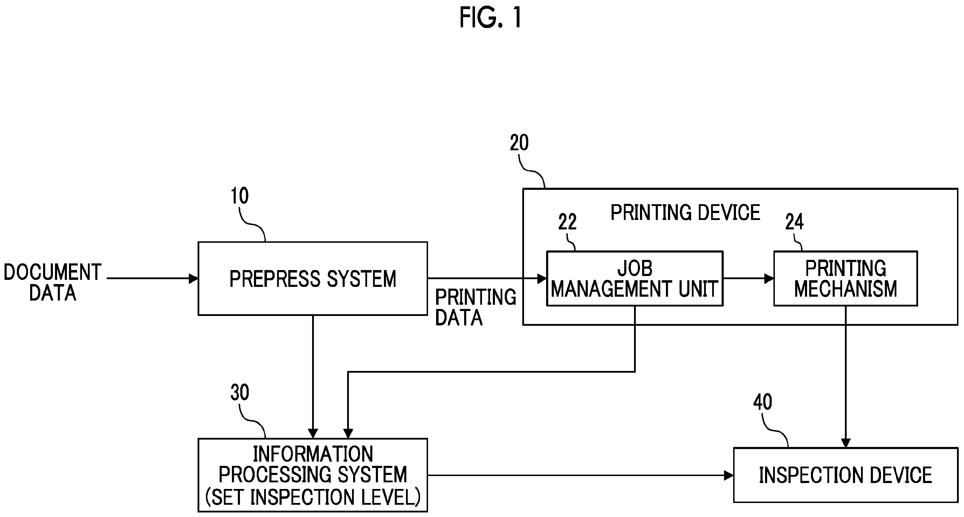

Fig. 1 illustrates the configuration of a printing and inspection system according to the present exemplary embodiment. The printing and inspection system includes a prepress system 10, a printing device 20, an information processing system 30, and an inspection device 40.

The prepress system 10 supports the prepress work of a user and generates printing data to be applied to the printing device 20 based on a result of the prepress work. For example, the prepress system 10 receives designations of typesetting and imposition from the user, and generates printing data by typesetting one or more pieces of document data in accordance with the designations. The printing data is data representing an image as a printing target. The printing data represents an image as a printing target in a format, for example, a page description language (referred to as a "PDL" below. The PDL is an abbreviation for Page Description Language) format or a portable document format (PDF).

Further, the prepress system 10 has a function of receiving settings for a workflow of a prepress step, actual printing, and a post-processing step, and generates printing data and setting information in accordance with the settings. There is a type of printed matter to be created among setting items for the workflow. As the type of printed matter, for example, pressure-bonded postcards, seals, signatures, and the like are provided. The prepress system 10 receives setting of a parameter in accordance with the type of printed matter. For example, in a case where the type of printed matter is a pressure-bonded postcard, the prepress system 10 may receive setting of the parameter indicating a fine classification of the pressure-bonded postcard, such as a bi-folded type or a Z-folded type. Further, in a case where the type of the printed matter is a seal, the prepress system 10 may receive, as the parameter, information defining a cut line representing an outer shape of a portion of seal paper, which is used as the seal. The printing data and the setting information generated by the prepress system 10 are supplied to the printing device 20.

The printing device 20 performs printing in accordance with printing data and setting information input from the prepress system 10. The printing device 20 may have a function of performing post-processing such as folding, bookbinding, staple binding, pressure-bonding binding, and seal cutting on paper after printing. Here, data that defines printing and post-processing performed by the printing device 20 is referred to as a job. The job includes printing data and setting information input from the prepress system 10, and setting information input from a user interface (UI) of the printing device 20.

The printing device 20 includes a job management unit 22 and a printing mechanism 24. The job management unit 22 manages the execution of one or more jobs held by the printing device 20. The job management unit 22 may, for example, receive an input of setting information for each job. The setting information received by the job management unit 22 may include various settings such as a setting related to the color and a setting related to post-processing. The printing mechanism 24 is a mechanism for printing printing data on paper. There are various printing methods such as a printing plate method, an inkjet method, and an electrophotographic method, and the printing mechanism 24 may use any of the various printing methods. The printing mechanism 24 may include a mechanism for performing post-processing on paper after printing. The printing mechanism 24 performs printing or post-processing in accordance with the setting information input from the user via the prepress system 10 or the job management unit 22.

In this example, various types of setting information regarding the job are input via the prepress system 10 and the job management unit 22. However, this is just an example. Only one of the prepress system 10 and the job management unit 22 may be configured to receive the input of the setting information for a job.

The information processing system 30 divides an image of a page represented by printing data into regions, and sets a level of inspection accuracy (simply referred to as a "level" below) in each region. The information processing system 30 specifies a variable data region in a page by, for example, analyzing printing data or setting information, and sets the level in accordance with whether or not the region is the variable data region. Here, the variable data region is a region in which printing contents are replaced for each printed matter. Such a printing process in which some print contents are replaced and printed for each printed matter may be referred to as variable printing. The information processing system 30 may set the level in accordance with the position of the variable data region on the page. The information processing system 30 may set the level in accordance with the size of the variable data region. The information processing system 30 divides a page group forming the printed matter into a plurality of regions in accordance with the type of printed matter, which is included in the setting information, and sets the level for each region. The level setting performed by the information processing system 30 will be described in detail later.

The inspection device 40 inspects an image printed by the printing device 20. The inspection device 40 performs an inspection by scanning a page as a printing result with an optical sensor such as a camera or a line sensor, and then executing a process such as comparison of an image obtained by the scanning (referred to as a scanned image below) to a reference image. The inspection device 40 may be, for example, a form built in the printing device 20 or a form connected to the printing device 20 such that a printed matter can be received from a paper ejection portion of the printing device 20.

The inspection performed by the inspection device 40 may be known in the related art. For example, the inspection device 40 compares the scanned image and the reference image with each other for each pixel, and determines the number of pixels having different values between the scanned image and the reference image, as the magnitude of a difference between the scanned image and the reference image. In a case where the magnitude of such a difference is equal to or less than an allowable threshold value, the printing result is determined to be pass. Other known inspection methods in the related art may be used.

The inspection performed by the inspection device 40 may include an inspection for checking whether or not the correct content represented by the job is printed, in terms of contents, or an inspection for checking whether or not there is a stain on a printing result, in terms of printing quality. The inspection in terms of contents includes, for example, an inspection for checking whether a numerical value, a bar code, or the like is printed correctly.

The reference image used in the inspection is an image to be originally formed on the surface of the printed matter. In one example, the reference image is generated, for example, by optically scanning a printed matter that has been confirmed by the human eye to be a correct printing result. In another example, raster image data generated by rasterizing printing data of a job is used as the reference image. Rasterization is a process of converting printing data described in PDL or the like into raster image data. This method is also applicable to a job of creating a printed matter having different print contents for each printed matter, such as variable printing. The printed matter may be a one-page document or a document consisting of a plurality of pages. In an inspection for the variable printing, the printing device 20 or the information processing system 30 generates a reference image corresponding to each printed matter from printing data of a job, and supplies, to the inspection device 40, the reference image corresponding to the printed matter, for example, in an order of generating the printed matter. The inspection device 40 performs an inspection by comparing a scanned image obtained by scanning a printing result of the printing device 20 to the corresponding reference image.

The inspection device 40 can change the inspection level for each region in an image represented by printing data. The inspection level can be changed, for example, by changing the resolution of an image used for the inspection (that is, the above-described scanned image and the reference image). In an inspection in which a scanned image and a reference image are compared to each other for each pixel, for example, even in a case where there is a size difference much smaller than the pixel size, it is difficult to detect the difference. Therefore, in a case where the resolution of the image used for the inspection is set to be low, the lower limit size of the detectable difference becomes large, and the inspection accuracy is lowered. Instead, in a case where the resolution is set to be low, the amount of data of the scanned image or the reference image becomes small. Thus, the required amount of the memory capacity of the information processing system 30 or the inspection device 40 can be set to be small. In addition, since the number of pixels is reduced, the number of times of comparisons between both images is reduced, and the processing load of the inspection is reduced. In this example, the higher the inspection level, the higher the resolution of the image, so that it is possible to detect the smaller difference.

In another example, the level inspection can be changed by making a threshold value for determination of pass or failure be different. In a case where an inspection in which the result is determined to be pass in a case where the magnitude of the difference between the scanned image and the reference image is equal to or less than the threshold value and the result is determined to be failure in a case where the difference exceeds the threshold value is performed, the lower the threshold value is set, the more difficult determination is to be pass. That is, the inspection level is strict. That is, in order to pass, the image of the printed matter is required to be closer to the reference image.

In a case where the inspection level that can be performed by the inspection device 40 is n steps (n is an integer of 2 or more), the lowest level among the n steps may mean that the inspection is not performed, and may mean that the inspection is performed with the lowest accuracy among the n steps.

### <Overview of Level Setting>

The information processing system 30 sets the level for each region of a printed matter generated by a job in accordance with the type of the printed matter. The information processing system 30 performs region-division in accordance with each type, for example, in a case where the type of printed matter is a pressure-bonded postcard, a case where the printed matter is a folded printed matter such as a folded pamphlet, or a case where the printed matter is a seal. Then, the information processing system 30 sets the level for each region.

First, a case of a pressure-bonded postcard will be described. In the case of a pressure-bonded postcard, a page group of a printing result is divided into a pressure-bonded surface that is pressure-bonded and a non-pressure-bonded surface that is not pressure-bonded. Since the pressure-bonded surface is hidden by pressure-bonding, it is not possible to view the pressure-bonded surface from the outside unless the pressure-bonded surface is peeled off. On the other hand, since the non-pressure-bonded surface is not hidden, the non-pressure-bonded surface can be viewed from the outside even in a pressure-bonded state. Information that needs to be viewed by a person other than the addressee or information that may be viewed by a person other than the addressee, such as a destination or a sender, is printed on the non-pressure-bonded surface. On the other hand, relatively major information such as confidential information (for example, personal information) or information that is particularly intended to be informed to the addressee (for example, an advertisement customized for the addressee) is printed on the pressure-bonded surface.

Therefore, in a case where the type of printed matter in the setting information of a job is the pressure-bonded postcard, the information processing system 30 specifies a page corresponding to the pressure-bonded surface and a page corresponding to the non-pressure-bonded surface among pages represented by printing data. The information processing system 30 sets the inspection level for the page corresponding to the pressure-bonded surface to be higher than the inspection level for the page corresponding to the non-pressure-bonded surface. As a result, the pressure-bonded surface on which more prior information is assumed to be printed is inspected with higher accuracy than the non-pressure-bonded surface.

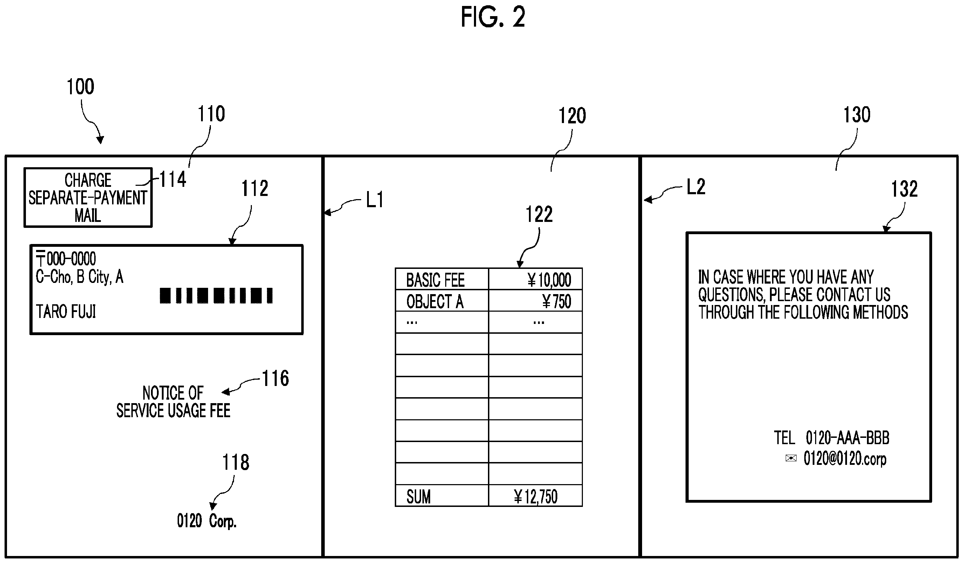

Fig. 2 illustrates an example of a pressure-bonded postcard 100. The pressure-bonded postcard 100 exemplified has a Z-folded type. The surface of the pressure-bonded postcard 100 is configured by three surfaces (that is, pages) of surfaces 110, 120, and 130. At the time of pressure-bonding, the surfaces 110 and 120 are folded along a boundary line L1, the surfaces 120 and 130 are folded along a boundary line L2, and the surfaces 120 and 130 are pressure-bonded. As a result of the pressure-bonding, the surfaces 120 and 130 are hidden and invisible. On the other hand, the surface 110 is not pressure-bonded to another surface and remains exposed to the outside. The surfaces 120 and 130 are pressure-bonded surfaces, and the surface 110 is a non-pressure-bonded surface. On the back surface side of the pressure-bonded postcard 100 that does not appear in Fig. 2, the back surface of the surface 110 and the back surface of the surface 120 are pressure-bonded to each other, and the back surface of the surface 130 is not pressure-bonded and remains exposed. Thus, the back surface of the surface 110 and the back surface of the surface 120 are pressure-bonded surfaces, and the back surface of the surface 130 is a non-pressure-bonded surface.

In the example of Fig. 2, the surface 110 is a surface on which the destination of the pressure-bonded postcard 100 is described, and a destination display 112, a charge separate-payment display 114, a title 116 of this postcard, and a company logo 118 of a sender are printed. The destination display 112 includes an address and a name of a destination, and a bar code indicating identification information unique to the destination. The content of the destination display 112 is variable data that is different for each pressure-bonded postcard 100, that is, for each destination. On the other hand, the charge separate-payment display 114, the title 116, and the company logo 118 are data common to all destinations (referred to as fixed data below). The pressure-bonded postcard 100 is provided for a notice of the fee for a service provided by the sender company to a user at the destination. The title 116 is a text string of "notice of service usage fee" indicating the purpose of this postcard.

A detail 122 of the usage fee of the service is printed on the surface 120. The detail 122 is provided for the service used by the user in the destination shown in the destination display 112, and is variable data corresponding to the destination.

Information 132 of a contact destination for a notification by this postcard is printed on the surface 130. This information 132 is fixed data common to all destinations.

In this example, it is assumed that the pressure-bonded postcard paper on which the charge separate-payment display 114, the title 116, and the company logo 118 are printed in advance is used. The printing device 20 prints the destination display 112, the detail 122, and the information 132 of the contact destination on the pressure-bonded postcard paper, and performs pressure-bonding binding.

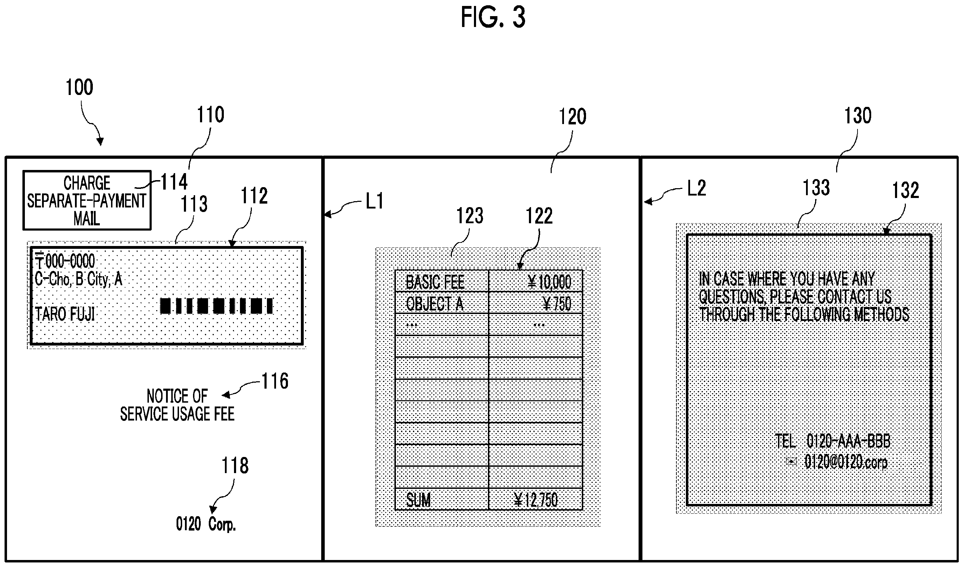

In one example, as illustrated in Fig. 3, the information processing system 30 sets regions 113, 123, and 133 including the destination display 112, the detail 122, and the information 132 of the contact destination, which are printed by the printing device 20, as inspection target regions. For example, the region 123 is set as a rectangular region slightly larger than a bounding box of an image content in the detail 122. The bounding box refers to the smallest rectangle that surrounds an object to be drawn (each side of the rectangle is parallel to either the vertical side or the horizontal side of the page). In this example, a region other than the regions 113, 123, and 133 in which printing is performed by the printing device 20, for example, a region in which the charge separate-payment display 114, the title 116, and the company logo 118 (which are printed in advance) are provided is not set as the inspection target region. The information processing system 30 sets the inspection level assigned to the regions 123 and 133 in the pressure-bonded surface among the regions 113, 123, and 133 to a level higher than the inspection level of the region 113 in the non-pressure-bonded surface. In Fig. 3, the inspection level becomes high as the dot density of a dot pattern applied to the regions 113, 123, and 133 increases. In this example, the same level is set in the regions 123 and 133, and this level is higher than the level set in the region 113.

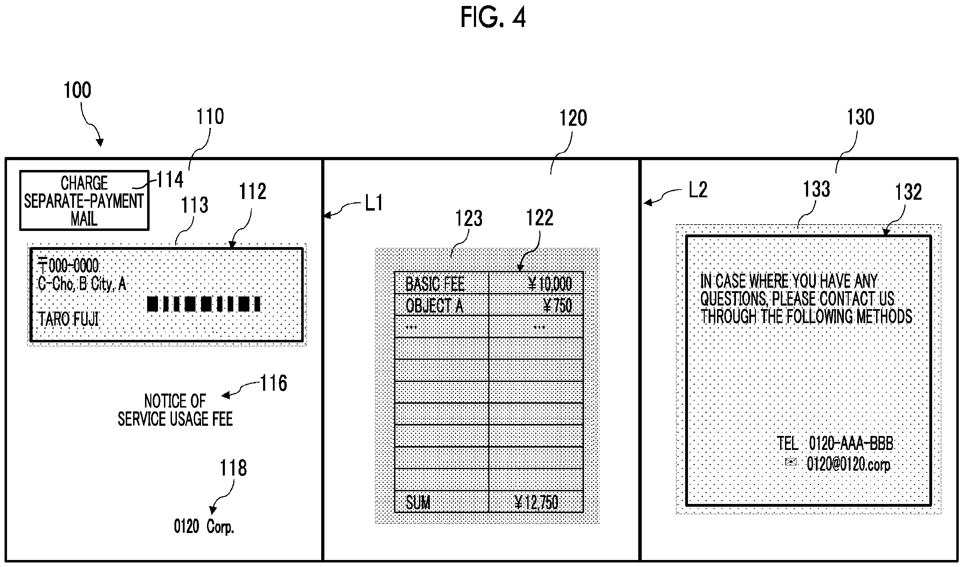

In another example, as illustrated in Fig. 4, the information processing system 30 sets the inspection level of the region 133 corresponding to the information 132 which is the fixed data among the regions 123 and 133 in the pressure-bonded surface, to be higher than the inspection level of the region 123 corresponding to the detail 122 that is variable data. Although not illustrated in Fig. 4, the level of the region of variable data is similarly set to be higher than the level of the region of fixed data among the regions on the non-pressure-bonded surface. In the comparison between the regions of the variable data, the level of the region on the pressure-bonded surface is set to be higher than the level of the region on the non-pressure-bonded surface. The same applies to the level relationship between the region of the fixed data region on the pressure-bonded surface and the region of the fixed data on the non-pressure-bonded surface.

The levels are determined to satisfy the above relationships, in a range allowed by the number of selectable levels. In the example illustrated in Fig. 4, the selectable levels are two levels of a high level and a low level. The level of the region 123 is set to be high, and the levels of the regions 113 and 133 are set to be low. In this case, the low level may mean that the inspection is not performed.

In a case where the number of selectable levels is 3, for example, the level of the region of the variable data on the pressure-bonded surface can be set to be high, the levels of the region of the fixed data on the pressure-bonded surface and the region of the variable data on the non-pressure-bonded surface can be set to be medium, and the level of the region of the fixed data on the non-pressure-bonded surface can be set to be low. Further, in a case where the number of selectable levels is 4 or more, the level of the region of the fixed data on the pressure-bonded surface can be set to be different from the level of the region of the variable data on the non-pressure-bonded surface.

In addition to the pressure-bonded postcard, there are other types of printed matter that use pressure-bonding binding, such as pressure-bonded direct mail. As described above, the level setting similar to the level setting illustrated in Fig. 3 or Fig. 4 can be applied to the type of printed matter using the pressure-bonding binding.

In a case where the type of printed matter is a folded printed matter, the level setting similar to the level setting for the pressure-bonded printed matter may be performed. The folded printed matter is a printed matter that is in a folded state by folding processing. In a case where a folded printed matter is created by folding processing such as bi-folding or tri-folding, the information processing system 30 sets the inspection level of an in-surface region that is hidden in the folded state to be higher than the level of an in-surface region that can be viewed from the outside in this state.

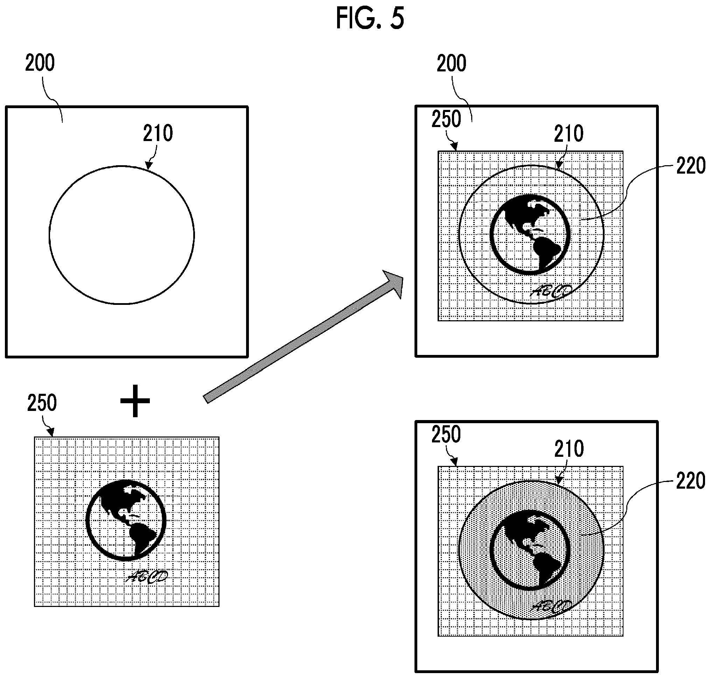

Next, the case of the seal will be described with reference to Fig. 5. In the case of seal printing, a cut line 210 is formed on the seal surface of seal paper 200. An inner portion of the cut line 210 on an adhesive surface of the seal paper 200 is peeled off from release paper to form a seal. In some cases, printing may be performed on the seal paper 200 on which the cut line 210 is formed in advance. In some cases, printing may be performed on the seal paper 200 on which the cut line 210 is not formed, and then the cut line 210 may be formed by post-processing. Here, for convenience, a case where the seal paper 200 on which the cut line 210 is formed in advance is used is taken as an example, but the level setting in the present exemplary embodiment is also applied to a case where the cut line 210 is formed in the post-processing after printing.

In the example of Fig. 5, an image 250 showing the design of the earth and the text string "ABCD" on the background pattern is printed on the seal paper 200 on which the cut line 210 is formed. In the state after printing, the design of the earth and the text string of "ABCD" in the image 250 fit within the cut line 210, but the background pattern sticks out of the cut line 210. In this case, the information processing system 30 sets the inspection level of the region 220 inside the cut line 210 to be higher than the inspection level outside the cut line 210.

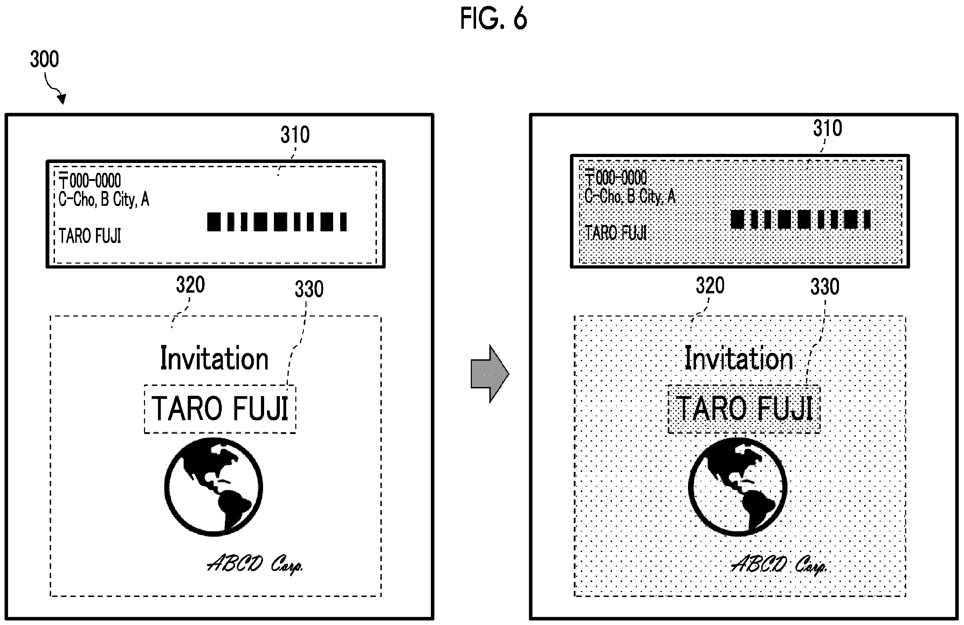

Fig. 6 illustrates an example of setting the inspection level in accordance with another criterion. A destination display 310 and an image 320 indicating the invitation content are printed on an invitation card 300 illustrated in Fig. 6. The destination display 310 includes a bar code indicating an address and a name of a guest who is the destination of the invitation card 300, identification information of the guest, and the like. The destination display 310 is variable data different for each destination. In the image 320 indicating the invitation content, the name 330 of the guest is variable data different for each destination, and other portions are fixed data common to all destinations.

In this example, the information processing system 30 sets the inspection level of the regions of the destination display 310 and the name 330 of the guest, which are variable data, to be higher than the level of the image 320 (the name 330 is excluded) which is fixed data.

Further, a level difference in accordance with another criterion may be provided between the destination display 310 and the name 330, which are the identical variable data. For example, a criterion for increasing the level closer to the center of the page can be considered. This criterion is based on the idea that high print quality is required because the closer to the center of the page, the easier it is to attract attention. Further, as another example, a criterion for increasing the level toward a region closer to an image such as a photograph can be considered. This criterion is based on the idea that high print quality is required for variable data in the vicinity of an image such as a photograph because the image easily attracts attention. As still another example, a criterion that the level is higher as the image size of the variable data is larger can be considered. This criterion is based on the idea that higher print quality is required because the larger the image size, the easier it is to attract attention.

### <Example of Processing Procedure>

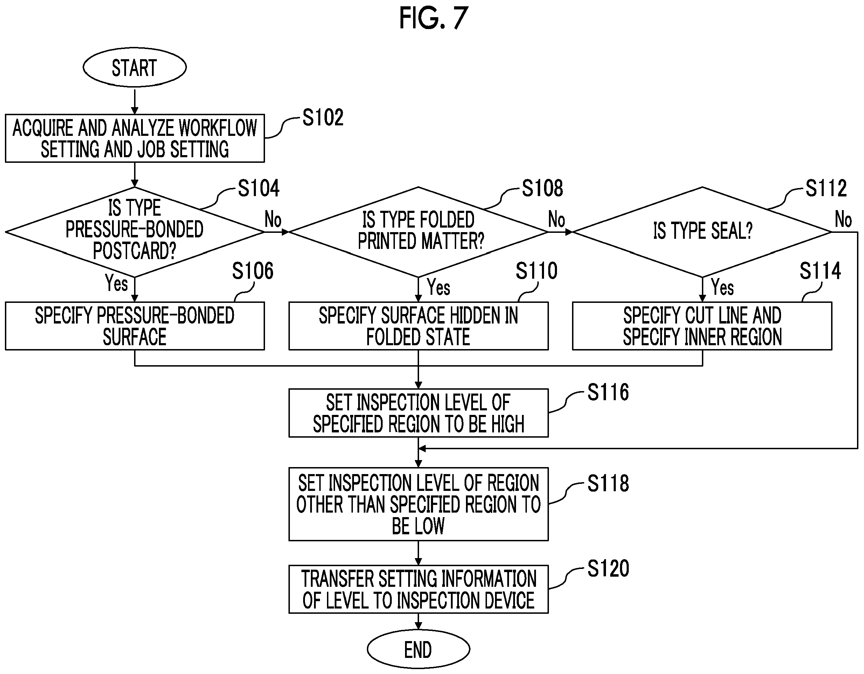

Next, an example of a processing procedure performed by the information processing system 30 will be described with reference to Fig. 7. Although this is just an example, in this example, it is assumed that the inspection level that can be selected by the inspection device 40 is two levels of a high level and a low level.

In the processing procedure of Fig. 7, in a case where execution of a job for which setting indicating that an inspection is performed is made is started, the information processing system 30 acquires setting information of a workflow for this job from the prepress system 10 and acquires setting information of the job from the job management unit 22, and then analyzes the acquired information (S102). Then, the information processing system 30 determines whether or not the type of printed matter indicated by the setting information is a pressure-bonded printed matter such as a pressure-bonded postcard (S104). In a case where the determination result is Yes, the information processing system 30 specifies, based on the setting information, a surface to be hidden in the pressure-bonded state, that is, a pressure-bonded surface among a plurality of surfaces (that is, pages) forming one pressure-bonded printed matter (S106). In a case where the determination result in S104 is No, the information processing system 30 determines whether or not the type of printed matter indicated by the setting information is a folded printed matter (S108). In a case where the determination result is Yes, the information processing system 30 specifies a surface to be hidden in the folded state among a plurality of surfaces forming one printed matter, based on the setting information (S110). In a case where the determination result in S108 is No, the information processing system 30 determines whether or not the type of printed matter indicated by the setting information is a seal (S112). In a case where the determination result is Yes, the information processing system 30 obtains a cut line of the seal from the setting information, and specifies a region inside the cut line (S114). In a case where seal paper on which the cut line is formed in advance is used, it is assumed that information on the position or shape of the cut line of the paper are registered as, for example, one item of setting information of the workflow. Further, in a case where the cut line is formed on the seal paper by a post-processing mechanism of the printing device 20, the cut line may be specified from the setting information input for forming the cut line. The execution order of S104, S108, and S112 is not limited to the execution order illustrated in Fig. 7, and any order may be used.

Then, the information processing system 30 sets the inspection level for the region specified in S106, S110, or S114 (that is, the pressure-bonded surface, the surface hidden in the folded state, or the region inside the cut line) to be high (S116). The information processing system 30 sets the level of the region that does not correspond to the above surface or region to be low (S118). For example, in a case where the type of printed matter generated by the job is a pressure-bonded postcard, in S116 and S118, among a plurality of surfaces forming one printed matter (that is, one pressure-bonded postcard), the level of the pressure-bonded surface is set to be high and the level of the non-pressure-bonded surface is set to be low.

In addition, instead of setting the inspection level for the entire pressure-bonded surface specified in S106 to be high, the information processing system 30 may set the level only for the region in which there is an image to be printed in the pressure-bonded surface, or the level only for a region obtained by expanding the above region by a predetermined ratio, to be high. The region in which there is the image to be printed is a region in which an object is drawn by a drawing command in the printing data. In this case, a portion of the pressure-bonded surface other than the region in which the level "high" is set may be excluded from the inspection target. Similarly, in S118, the level may be set to be low only for a region in which there is the image to be printed (or a region obtained by expanding the above region by a predetermined ratio), instead of the entire non-pressure-bonded surface. The portion of the non-pressure-bonded surface other than the region where the level is set to be low is excluded from the inspection target. The same applies to the case of folding processing.

The information processing system 30 transfers level setting information indicating the result of the setting in S116 and S118 to the inspection device 40 (S120). In accordance with the received level setting information, the inspection device 40 performs an inspection of a level set in a region for each region of the printing result by the printing mechanism 24.

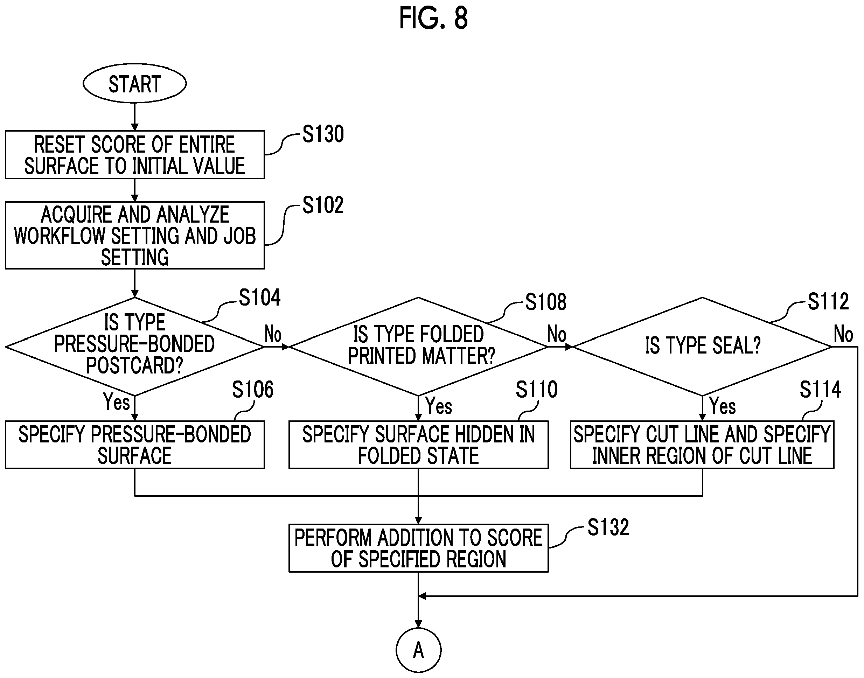

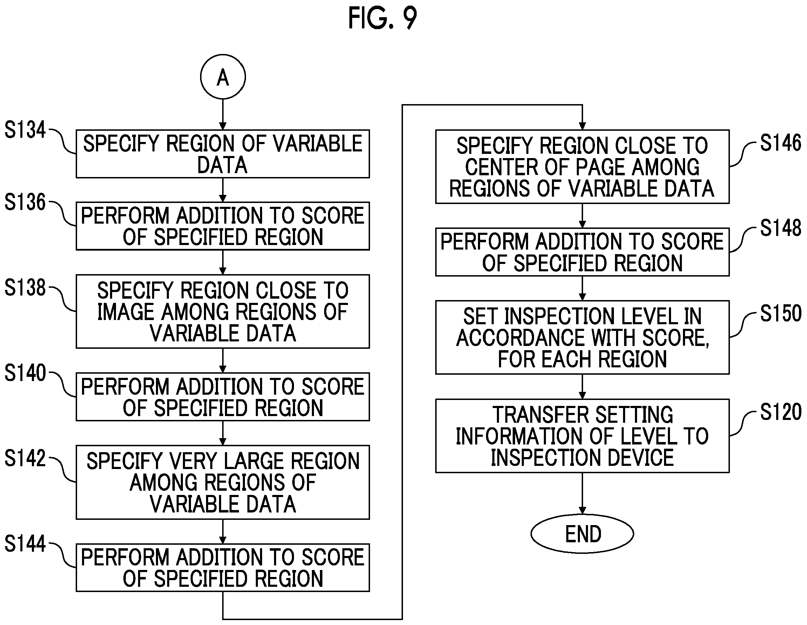

Next, an example of a processing procedure performed by the information processing system 30 will be described with reference to Figs. 8 and 9. In this example, the inspection level that can be selected by the inspection device 40 is n steps (n is an integer of 2 or more). In Fig. 8 and Fig. 9, steps representing the similar processes to the steps of the procedure of Fig. 8 are denoted by the identical reference signs.

In this procedure, the information processing system 30 gives a score to each region in page represented by the printing data in accordance with various features of the region, and determines the inspection level of each region in accordance with the score of each region.

As illustrated in Fig. 8, in a case where execution of a job for which setting indicating that an inspection is performed is made is started, the information processing system 30 resets the score of the entire surface of each page forming the printed matter generated by the job to an initial value (S130). Then, the information processing system 30 executes the processes of S104 to S114 in the similar manner to the procedure of Fig. 8. The information processing system 30 adds a predetermined score to each region specified in S106, S110, or S114 (that is, the pressure-bonded surface, the surface hidden in the folded state, or the region inside the cut line) (S132). Immediately after S130, the score of the entire surface of the printed matter is the initial value, but the score for each region specified in S106, S110, or S114 in the entire surface has a value obtained by adding a predetermined score to the initial value by S132. In this example, in S132, the same predetermined score is added for the pressure-bonded surface, the surface hidden in the folded state, or the region inside the cut line, but this is just an example. Instead, scores individually determined for each of three types of regions may be added.

Then, as illustrated in Fig. 9, the information processing system 30 specifies a region in which the variable data is printed, by analyzing the printing data and the setting information of the job (S134). Then, the information processing system 30 adds a predetermined score corresponding to the feature indicating the variable data, to the score of each specified region (S136). Further, the information processing system 30 specifies a region in which a distance from the image of the photograph is within a predetermined threshold value among the regions specified in S134 (S138). Then, the information processing system 30 adds a predetermined score corresponding to the feature indicating that the region is close to the image of the photograph, to the score of each specified region (S140). In addition, the information processing system 30 specifies a region having a size that is equal to or greater than a predetermined threshold value among the regions specified in S134 (S142), and adds a predetermined score corresponding to the feature indicating that the size is large, to the score of each specified region (S144). Further, the information processing system 30 specifies a region in which a distance from the center of the page is within a predetermined threshold value among the regions specified in S134 (S146), and adds a predetermined score corresponding to the feature indicating that the region is close to the center of the page, to the score of each specified region (S148).

The threshold values used in S138, S142, and S146 may be predetermined fixed values. Further, the threshold values may be determined from an object group included in the printing data of the job. For example, as the threshold value of the size used in S142, a statistical value regarding the size of an object in the job, for example, the size at a position of 10% in a case of being viewed in descending order in the job may be used.

With the above processing, for example, the score of the region of the variable data in the pressure-bonded surface, in which the distance to the image of the photograph is equal to or less than the threshold value has a value obtained by performing addition in S132, addition in S136, and addition in S138 to the initial value. For example, although the region does not correspond to any of the pressure-bonded surface, the surface hidden in the folded state, and the region within the cut line of the seal, the score of the region of the variable data determined to have a size that is equal to or greater than the threshold value in S142 has a value obtained by performing addition in S144 to the initial value.

The execution order of the steps illustrated in Fig. 9 is just an example.

The information processing system 30 sets the inspection level in accordance with the score of each region of each surface of the printed matter (S 150). For example, the range of a value that may be provided for the score is divided into the number of steps of the inspection level, and the higher level is assigned to each divided range in descending order of the score. In S 150, the information processing system 30 obtains the inspection level corresponding to the range in which the score of this region is located, and sets the level for the region. The level setting information indicating the result of the setting in S 150 is transferred to the inspection device 40 (S120). In accordance with the received level setting information, the inspection device 40 performs an inspection of a level set in a region for each region of the printing result by the printing mechanism 24.

The procedures illustrated in Figs. 7, 8, and 9 have been described as being performed in a case where a job is started, but this is just an example. Even at a time other than the start of the job, for example, in a case where an instruction to generate inspection setting information for the job, the inspection setting information for this job may be generated in the similar processing procedure.

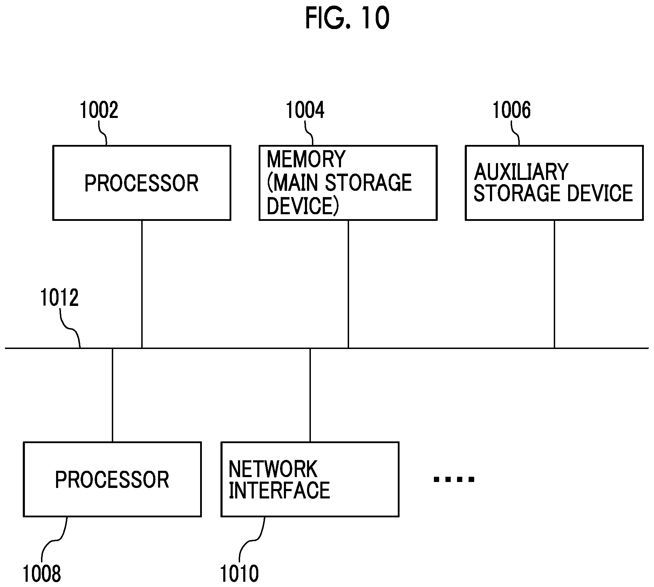

The information processing system 30 described above is configured by using, for example, a general-purpose computer. For example, as illustrated in Fig. 10, the computer has a circuit configuration in which the following elements are connected via a data transmission path such as a bus 1012. The elements include: a processor 1002; a memory (main storage device) 1004 such as a random access memory (RAM); a controller that controls an auxiliary storage device 1006 that is a non-volatile storage device such as a flash memory, a solid state drive (SSD), or a hard disk drive (HDD); an interface with various input and output devices 1008; a network interface 1010 that performs control for connection with a network such as a local area network; and the like. A program describing the content of the processing of the above-described exemplary embodiment is installed in the computer through the network or the like and stored in the auxiliary storage device 1006. The information processing mechanism in the present exemplary embodiment is configured by executing the program which is stored in the auxiliary storage device 1006 by the processor 1002 using the memory 1004.

Further, the information processing system 30 may be configured by a single computer or a plurality of computers. For example, some functions of the information processing system 30 may be provided in a computer built in the prepress system 10, the printing device 20, or the inspection device 40, or another computer.

In the embodiments above, the term "processor" refers to hardware in a broad sense. Examples of the processor include general processors (e.g., CPU: Central Processing Unit) and dedicated processors (e.g., GPU: Graphics Processing Unit, ASIC: Application Specific Integrated Circuit, FPGA: Field Programmable Gate Array, and programmable logic device).

In the embodiments above, the term "processor" is broad enough to encompass one processor or plural processors in collaboration which are located physically apart from each other but may work cooperatively. The order of operations of the processor is not limited to one described in the embodiments above, and may be changed.

### Supplementary Note

(((1))) An information processing system comprising:
   a processor configured to:
   specify a first region in an image represented by printing data based on setting information for a printing process based on the printing data; and
   generate instruction information for an instruction to inspect the specified first region with inspection accuracy higher than inspection accuracy in a region other than the first region, as instruction information for an inspection device that inspects a result of the printing process.
(((2))) The information processing system according to (((1))), wherein the processor is configured to:
   specify the first region based on a type of a printed matter specified from the setting information.
(((3))) The information processing system according to (((2))), wherein the processor is configured to:
   in a case where the specified type is a pressure-bonded printed matter, specify a region that is pressure-bonded and hidden, as the first region.
(((4))) The information processing system according to (((2))), wherein the processor is configured to:
   in a case where the specified type is a folded printed matter, specify a region that is hidden from an outside in a folded state, as the first region.
(((5))) The information processing system according to (((2))), wherein the processor is configured to:
   in a case where the specified type is a seal, specify a region within a cut line of the seal, as the first region.
(((6))) The information processing system according to any one of (((1))) to (((5))), wherein the processor is configured to:
   generate, as the instruction information, the instruction information including information for an instruction to inspect a region in which fixed data is printed in the first region, with accuracy lower than accuracy in a region in which variable data is printed in the first region.
(((7))) A program causing a computer to execute a process comprising:
   specifying a first region in an image represented by printing data based on setting information for a printing process based on the printing data; and
   generating instruction information for an instruction to inspect the specified first region with inspection accuracy higher than inspection accuracy in a region other than the first region, as instruction information for an inspection device that inspects a result of the printing process.

According to the configuration according to (((1))) or (((7))), it is possible to reduce a burden on a user for setting inspection accuracy for each region in a printed matter as compared with a case where the exemplary embodiment of the present invention is not used.

According to the configuration according to (((2))), it is possible to set inspection accuracy of each region in accordance with the type of printed matter.

According to the configuration according to (((3))), it is possible to set inspection accuracy for a region that is pressure-bonded and hidden, to be higher than inspection accuracy for a region that is not pressure-bonded and hidden.

According to the configuration according to (((4))), it is possible to set inspection accuracy for a region hidden in a folded state, to be higher than inspection accuracy for a region that is not hidden in the folded state.

According to the configuration according to (((5))), it is possible to set inspection accuracy for a region within a cut line of a seal, to be higher than inspection accuracy for a region that is not within the cut line of the seal.

According to the configuration according to (((6))), it is possible to set inspection accuracy for a region in which variable data is printed, to be higher than inspection accuracy for a region in which fixed data is printed.

The foregoing description of the exemplary embodiments of the present invention has been provided for the purposes of illustration and description. It is not intended to be exhaustive or to limit the invention to the precise forms disclosed. Obviously, many modifications and variations will be apparent to practitioners skilled in the art. The embodiments were chosen and described in order to best explain the principles of the invention and its practical applications, thereby enabling others skilled in the art to understand the invention for various embodiments and with the various modifications as are suited to the particular use contemplated. It is intended that the scope of the invention be defined by the following claims and their equivalents.

### Brief Description of the Reference Symbols

10: prepress system
20: printing device
22: job management unit
24: printing mechanism
30: information processing system
40: inspection device

## Claims

1. An information processing system comprising:
a processor is configured to:
specify a first region in an image represented by printing data based on setting information for a printing process based on the printing data; and
generate instruction information for an instruction to inspect the specified first region with inspection accuracy higher than inspection accuracy in a region other than the first region, as instruction information for an inspection device that inspects a result of the printing process.

2. The information processing system according to claim 1, wherein the processor is configured to:
specify the first region based on a type of a printed matter specified from the setting information.

3. The information processing system according to claim 2, wherein the processor is configured to:
in a case where the specified type is a pressure-bonded printed matter, specify a region that is pressure-bonded and hidden, as the first region.

4. The information processing system according to claim 2, wherein the processor is configured to:
in a case where the specified type is a folded printed matter, specify a region that is hidden from an outside in a folded state, as the first region.

5. The information processing system according to claim 2, wherein the processor is configured to:
in a case where the specified type is a seal, specify a region within a cut line of the seal, as the first region.

6. The information processing system according to any one of claims 1 to 5, wherein the processor is configured to:
generate, as the instruction information, the instruction information including information for an instruction to inspect a region in which fixed data is printed in the first region, with accuracy lower than accuracy in a region in which variable data is printed in the first region.

7. A program causing a computer to execute a process comprising:
specifying a first region in an image represented by printing data based on setting information for a printing process based on the printing data; and
generating instruction information for an instruction to inspect the specified first region with inspection accuracy higher than inspection accuracy in a region other than the first region, as instruction information for an inspection device that inspects a result of the printing process.

8. An information processing method comprising:
specifying a first region in an image represented by printing data based on setting information for a printing process based on the printing data; and
generating instruction information for an instruction to inspect the specified first region with inspection accuracy higher than inspection accuracy in a region other than the first region, as instruction information for an inspection device that inspects a result of the printing process.
